# FASCICULE DE BREVET EUROPEEN

(11) **EP 1 268 567 B1**
(45) Date de publication et mention de la délivrance du brevet: **08.06.2005**
(21) Numéro de dépôt: 01996560.7
(22) Date de dépôt: 13.11.2001
(51) Int. Cl.: C08F 2/44

(54) **PROCEDE D'OBTENTION D'UN LATEX PHOTOCHROMIQUE**
VERFAHREN ZUR HERSTELLUNG EINER PHOTOCHROMEN LATEX
METHOD FOR OBTAINING A PHOTOCHROMIC LATEX

(30) Priorité: 17.11.2000 FR 0014903
(43) Date de publication de la demande: 02.01.2003
(73) Titulaire: ESSILOR INTERNATIONAL COMPAGNIE GENERALE D'OPTIQUE, 94227 Charenton cédex (FR)
(72) Inventeur: ROBERT, Anne, F-94440 VILLECRESNE (FR); TARDIEU, Pascale, F-75011 PARIS (FR); MAISONNIER, Sylvette, F-95570 MOISSELLES (FR); CANO, Jean-Paul, F-94470 CHENNEVIERES sur MARNE (FR)
(74) Mandataire: Le Brusque, Maurice
(86) Numéro de dépôt international: PCT/FR2001/003549
(87) Numéro de publication internationale: WO 2002/040548

(56) Documents cités:
- WO-A-89/05464
- FR-A- 2 790 264

## Description

La présente invention concerne de manière générale un procédé d'obtention d'un latex photochromique, en particulier pour des applications dans le domaine optique et préférentiellement en optique ophtalmique.

Comme cela est bien connu, les latex sont des émulsions de polymères, en particulier des émulsions aqueuses.

Ces latex sont classiquement préparés par polymérisation en émulsion de monomères.

Typiquement, la polymérisation en émulsion nécessite l'emploi d'au moins un monomère ou mélange de monomères, d'un tensioactif ou mélange de tensioactifs, et d'un initiateur ou amorceur de polymérisation. Le monomère ou le mélange de monomères est dispersé en gouttelettes à l'aide du tensioactif ou mélange de tensioactifs et d'une agitation avec un cisaillement élevé. Les gouttelettes de monomère ont généralement un diamètre de 1 à 10 µm.

Les émulsions en latex obtenues par les procédés classiques ont pour inconvénients d'être instables, de manquer de reproductibilité et de présenter des variations de la taille des particules.

Pour remédier à ces inconvénients, on a proposé d'ensemencer les gouttelettes de monomère avec des particules de polymère de taille et concentration connues. Les particules de semence, lorsqu'elles sont au contact des gouttelettes de monomère, gonflent jusqu'à une taille d'équilibre. Une telle technique est décrite dans le brevet US-4,011,388.

Si cette technique d'ensemencement permet un réglage précis du nombre et de la dimension des particules, elle dépend de de la vitesse et du degré de gonflement des particules.

On a également proposé dans le brevet US-5,686,518 un procédé d'obtention de latex qui consiste à dissoudre un ou plusieurs polymères dans un monomère ou mélange de monomères éthyléniquement insaturés et à disperser la solution de polymère dans le monomère dans de l'eau et au moins un tensioactif pour obtenir une « miniémulsion » dont les gouttelettes ont un diamètre moyen de 10 à 500 nm, puis à polymériser la « miniémulsion » pour obtenir le latex final.

L'utilisation de miniémulsions pour la polymérisation en émulsion est également décrite dans les documents FR-2.785.904, EP-852-239, US-5,569,716, US-5,653,965 et WO-98/50436.

Aucun des documents ne concerne la préparation d'un latex photochromique.

Les latex photochromiques sont classiquement obtenus en préparant une première solution comprenant le ou les monomères et le ou les composés photochromiques et une deuxième solution comprenant le milieu de dispersion, généralement de l'eau et un agent tensio-actif, en mélangeant les deux solutions avec une agitation vigoureuse pour obtenir une pré-émulsion. La pré-émulsion est alors transférée en une seule fois dans un réacteur et est dégazée sous azote avec agitation. A la fin du dégazage on introduit l'amorceur de polymérisation, généralement en solution dans un solvant (typiquement de l'eau), et on effectue la polymérisation à chaud pour obtenir le latex.

Le latex obtenu est alors grossièrement filtré sur tissus puis stocké à l'abri de la lumière.

Un tel procédé d'obtention d'un latex à propriétés photochromiques est décrit dans le document FR-2.790.264.

Outre les problèmes de stabilité évoqués précédemment, les latex photochromiques obtenus par le procédé classique présentent, lors de leur synthèse, une migration importante du ou des composés photochromiques dans la phase aqueuse entraînant une dégradation partielle ou complète des composés photochromiques dans le film de latex final. Par suite, les procédés classiques nécessitent l'emploi de quantités importantes de composés photochromiques coûteux pour tenir compte de ces pertes par migration.

L'invention a donc pour objet de fournir un procédé d'obtention de latex photochromique qui limite, voire supprime, la migration des composés photochromiques dans la phase aqueuse du latex, lors de sa synthèse.

Selon l'invention, le procédé d'obtention d'un latex photochromique comprend:
(1) la préparation d'un mélange comprenant au moins un monomère organique Z à groupement C=C, polymérisable par voie radicalaire, au moins un composé photochromique organique, au moins un agent tensio-actif, de l'eau et éventuellement un amorceur de polymérisation ;
(2) le traitement du mélange obtenu à l'étape (1) pour former une miniémulsion comprenant une phase organique dispersée sous forme de gouttelettes ayant un diamètre de 50 à 500 nm, de préférence 50 à 300 nm, dans une phase aqueuse;
(3) l'addition à la miniémulsion d'un amorceur de polymérisation, si celui-ci n'a pas été introduit à l'étape (1), ou d'une quantité supplémentaire d'amorceur par rapport à l'étape (1) ;
(4) la polymérisation du mélange réactionnel obtenu à l'étape (3), et
(5) la récupération du latex photochromique.

Dans une réalisation préférée du procédé de l'invention, on rajoute au mélange de l'étape (1) un agent de stabilisation de la miniémulsion.

De préférence, le mélange de l'étape (1) est obtenu en préparant séparément une solution A comprenant le ou les monomères, le ou les composés photochromiques et éventuellement le ou les agents de stabilisation et une solution B comprenant l'eau et le ou les agents tensio-actifs, puis en réunissant les deux solutions A et B.

Le mélange des deux solutions A et B est alors traité, par exemple au moyen d'un microfluidiseur pour obtenir une miniémulsion dont le diamètre des gouttelettes de la phase organique varie de 50 à 500 nm, de préférence de 50 à 300 nm et typiquement de l'ordre de 200 nm.

Le microfluidiseur est un émulsificateur par impact à haute pression. Un tel microfluidiseur est décrit dans le brevet US-4,533,254 et est commercialisé par la société Microfluidics Corporation in Naston, Massassuchets, USA. Un autre microfluidiseur est commercialisé par la société Stansted Fluid Power LTD. Brièvement, le dispositif consiste en une pompe haute pression et en une chambre d'interaction où l'émulsion se fait. Généralement, le mélange est passé une fois dans l'émulsificateur à une pression de 35 à 105 MPa.

La taille des gouttelettes variera en fonction de la composition du mélange, de la pression imposée et du nombre de passes dans l'émulsificateur.

Ainsi, avec une pression de 70 MPa, on a obtenu des miniémulsions selon l'invention ayant un diamètre de gouttelettes d'environ 200 nm.

La miniémulsion peut également être obtenue avec des dispositifs à ultrasons ou des agitateurs mécaniques du type de l'Ultraturax™.

La miniémulsion obtenue est alors généralement transférée directement dans un réacteur où elle est dégazée. Ce dégazage s'effectue en général sous azote, avec agitation et à une température qui peut aller de la température ambiante jusqu'à 90°C, de préférence à une température de 40 à 70°C.

Une fois le dégazage terminé, on ajoute directement dans ce réacteur un ou plusieurs amorceurs de polymérisation et on procède à la polymérisation du ou des monomères, sous agitation, et de préférence à une température supérieure à la température ambiante, généralement de 50 à 90°C.

Optionnellement, au cours de la polymérisation, on peut ajouter goutte à goutte une quantité mineure, généralement inférieure à 10%, préférentiellement inférieure à 5% en masse par rapport à la masse de monomère Z initiale, d'un ou plusieurs autres monomères polymérisables afin, par exemple, d'adapter les propriétés mécaniques des particules de latex.

La réaction de polymérisation est terminée lorsque le taux d'extrait sec de l'émulsion est stabilisé.

A ce stade, on peut incorporer au latex obtenu, et concomitamment avec un amorceur de polymérisation un ou plusieurs autres monomères polymérisables, par exemple des acrylates ou des méthacrylates afin d'obtenir un latex dont les particules sont de type coeur/écorce.

Le latex obtenu est récupéré de manière classique, par exemple par filtration sur tissu.

Généralement les particules de polymères du latex obtenu ont un diamètre de 50 à 400 nm.

Les monomères Z recommandés sont des monomères de type (méth)acrylate d'alkyle, de préférence de type mono(méth)acrylate.

Les groupements alkyles sont de préférence des groupements alkyles en C₁-C₁₀, tels que méthyle, éthyle, propyle et butyle.

Parmi les monomères préférés on peut citer les acrylates et méthacrylates de méthyle, éthyle, propyle et butyle.

On peut aussi utiliser des mélanges de ces monomères, en particulier des mélanges de monomères acrylate d'alkyle en C₂-C₁₀ et de méthacrylate d'alkyle en C₁-C₃.

Les composés photochromiques organiques convenant pour le procédé de l'invention sont tous composés organiques présentant des propriétés photochromiques. Ces composés sont bien connus dans la technique.

Les composés préférés sont les chromènes et les spiroxazines.

Ces chromènes sont décrits entre autres dans les documents US-3,567,605, US-5,066,818, WO-93/17071, WO-94/20869, FR-2.688.782, FR-2.718.447, EP-0.401.958 et EP-0.562915.

Les spiroxazines sont également des composés photochromiques bien connus. De tels composés sont décrits, entre autres, dans les brevets US-5,114,621, EP-0.245.020, JP-A-03,251,587, WO-96/04590 et FR-2.763.070.

Préférentiellement, le monomère Z est choisi parmi les méthacrylates d'alkyle et le composé photochromique est choisi parmi les spirooxagines.

Le composé photochromique est introduit en quantité suffisante pour obtenir l'effet photochromique recherché dans les films finals de latex.

Les concentrations en composé photochromique varient généralement de 1 à 10% et de préférence de 2 à 7% en poids, par rapport au poids des monomères polymérisables présents dans le latex.

Pour favoriser la solubilisation du composé photochromique, on peut éventuellement rajouter dans ce mélange une faible quantité d'un solvant du composé photochromique, par exemple de N-méthylpyrrolidone dans le cas des chromènes. La quantité de solvant rajoutée peut aller jusqu'à 5% en poids par rapport au poids des monomères polymérisables présents dans le mélange.

L'agent tensio-actif peut être ionique, non-ionique ou amphotère. Parmi les agents tensio-actifs ioniques, on peut citer le dodécylsulfate de sodium, le dodécylbenzène sulfate de sodium, le sulfonate de sodium, les sulfates d'alcools gras éthoxylés et le bromure de cétyl triméthylammonium (CTAB).

Parmi les tensio-actifs non-ioniques, on peut citer les alcools gras éthoxylés.

On peut évidemment utiliser un mélange d'agents tensio-actifs.

L'agent de stabilisation éventuellement ajouté, peut être tout composé qui stabilise l'émulsion et qui ne nuit pas aux propriétés voulues pour les latex et les films formés à partir de ces latex.

L'agent de stabilisation peut être un n-alcane, un n-alcane halogéné ou un monomère polymérisable ou non, comportant une chaîne grasse tel qu'un alcool gras ou un ester d'alcool gras.

Les agents de stabilisation préférés sont l'hexadécane, l'alcool cétylique et le méthacrylate de stéaryle.

L'agent particulièrement préféré est le méthacrylate de stéaryle car il s'intègre au réseau en raison de la présence de la fonction méthacrylate.

La teneur en agent de stabilisation dans le mélange varie généralement de 0,1 à 10%, de préférence de 2 à 6%, par rapport au poids de monomères polymérisables présents dans le mélange.

L'amorceur de polymérisation peut être tout amorceur classiquement utilisé. Il peut être soluble dans l'eau ou la phase organique. L'amorceur est préférentiellement introduit uniquement lors de l'étage (3).

Les amorceurs solubles dans l'eau utilisés pour la polymérisation des compositions de l'invention sont des sels et composés possédant au moins une fonction hydrophile.

Parmi ces sels et composés, on peut citer les persulfates des métaux alcalins et d'ammonium, en particulier les persulfates de sodium ou de potassium, l'eau oxygénée, et le dihydrochlorure de 2,2'-azobis(2-amidino propane).

On peut également utiliser des peroxydes partiellement hydrosolubles tels que le peracide succinique et l'hydroperoxyde de t-butyle.

On peut aussi employer des systèmes rédox tels que les persulfates associés à un ion ferreux.

On peut citer également l'hydroperoxyde de cumyle ou l'eau oxygénée, en présence d'ions ferreux, sulfite ou bisulfite.

Parmi les amorceurs solubles dans la phase organique on peut citer l'azobisisobutyronitrile (AIBN).

La phase aqueuse de la miniémulsion peut comporter uniquement de l'eau ou elle peut comprendre un mélange d'eau et de solvant approprié, par exemple pour aider la filmification. Lorsqu'un solvant est présent, il peut généralement représenter jusqu'à 10% en poids de la phase aqueuse, de préférence moins de 5% en poids, et mieux encore moins de 2%.

De préférence la phase aqueuse comprend uniquement de l'eau.

Dans les exemples suivants, sauf indication contraire, tous les pourcentages et parties sont exprimés en poids.

### Exemples 1 à 5 et Exemples comparatifs A et B

On a préparé les mélanges dont les compositions sont indiquées au tableau (I) en combinant une solution A contenant le monomère polymérisable, l'agent de stabilisation et le composé photochromique à une solution B contenant le tensio-actif et de l'eau.

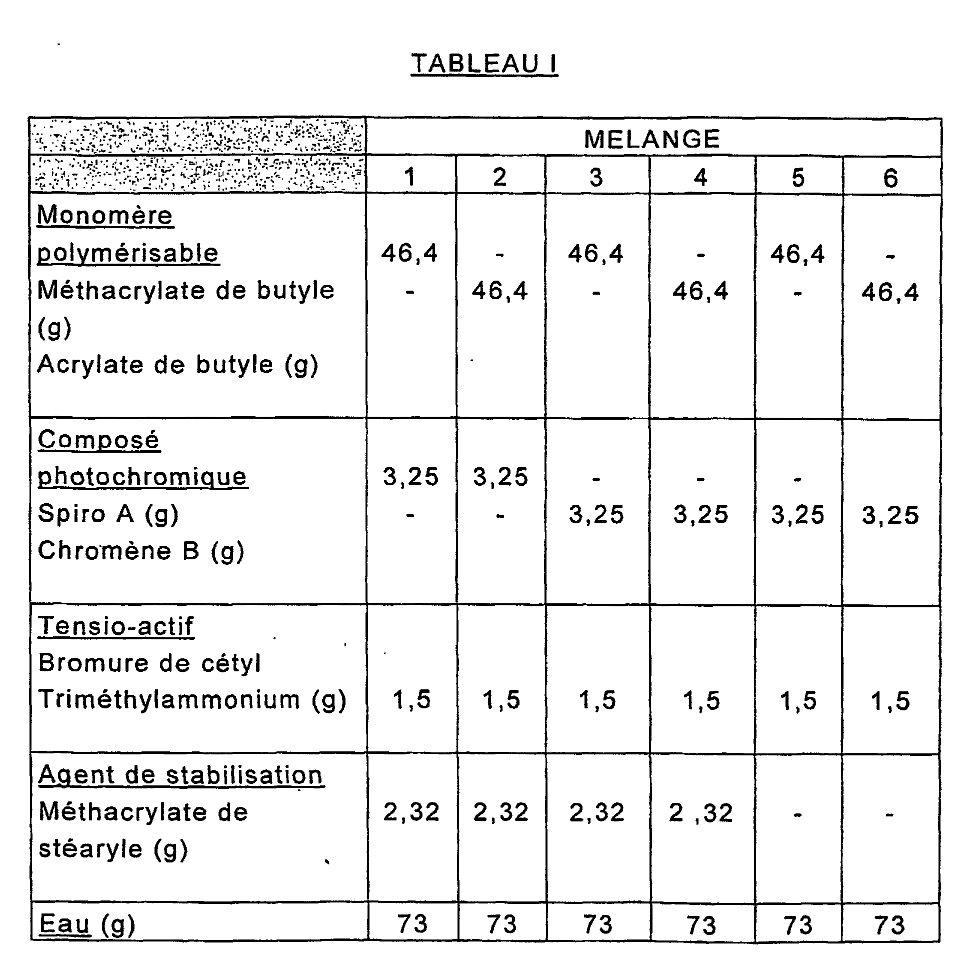

Pour faciliter la solubilisation du chromène B, a on ajouté 3,8% en poids par rapport au poids de monomère de N-méthylpyrrolidone dans la solution A.

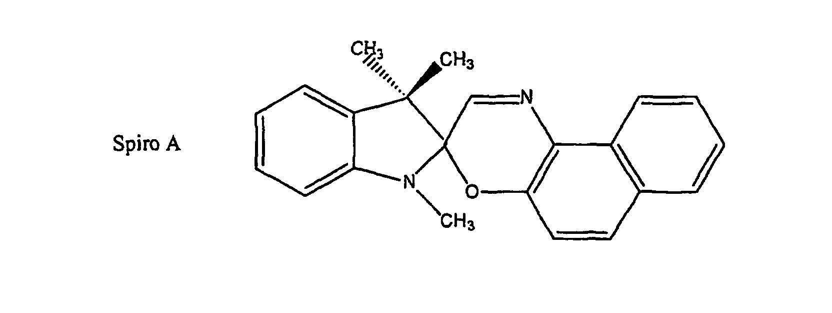

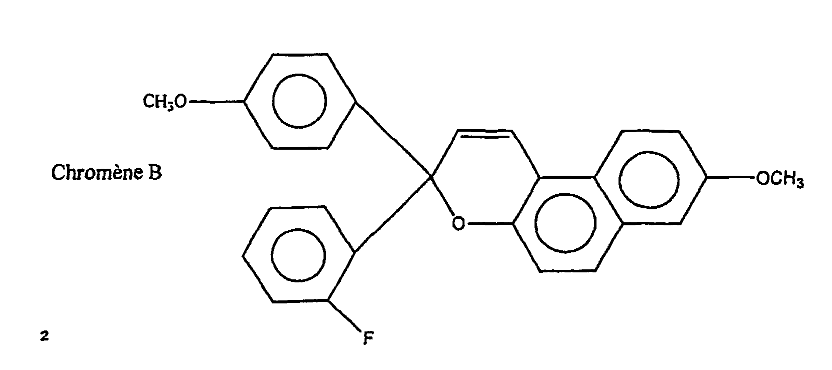

Les mélanges 1 à 4 sont traités de manière à obtenir une miniémulsion selon l'invention (Exemples 1 à 5) et les mélanges 5 et 6 sont traités de manière classique pour obtenir une émulsion classique (Exemples comparatifs A et B).

Pour obtenir la miniémulsion selon l'invention, les mélanges sont traités en une seule passe dans un microfluidiseur Stansted Fluid Power LTD, modèle nm-CEN 7400H à une pression de 70 MPa. Les miniémulsions récupérées en sortie ont un diamètre moyen des gouttelettes de 225 nm.

Les émulsions classiques sont obtenues par simple agitation mécanique des mélanges 5 et 6.

Les émulsions classiques et miniémulsions de l'invention sont ensuite transférées dans un réacteur et soumise à un dégazage sous azote pendant 30 minutes à 60°C, sous agitation avec un agitateur tournant à 250 t/minute.

Après dégazage, les gouttelettes des miniémulsions selon l'invention ont un diamètre moyen de 214 nm.

Dans le cas des émulsions classiques, les gouttelettes ont un diamètre de l'ordre de 1 µm.

On prépare une solution d'amorceur en dissolvant 0,48 g de dihydrochlorure de 2,2'-azobis(2-amidinopropane) dans 4,8g d'eau et on ajoute en une seule fois cette solution dans le réacteur contenant 103g d'émulsion ou miniémulsion pour initier la réaction de polymérisation, à l'exception de l'exemple 2 dans lequel on a introduit directement la même quantité d'azobisisobutyronitrile (2).

La polymérisation est effectuée à une température de 60°C.

A la fin de la polymérisation (2 h 45), après l'ajout de l'amorceur, on arrête le chauffage et on laisse refroidir jusqu'à la température ambiante (23°C). Les latex sont alors soutirés à 23°C et filtrés sur tissus.

Les latex des exemples 1 à 5 ont un extrait sec de 37% en poids.

Les latex obtenus par le procédé classique ont un extrait sec de 40% en poids.

L'extrait sec est mesuré classiquement par séchage du latex dans un dessicateur jusqu'à poids constant.

Le diamètre moyen des gouttelettes et des particules est déterminé par un Zetasizer (MALVERNE), par diffusion de la lumière.

On a réalisé par dépôt centrifuge [200 t/minute pendant 10 s, puis 1000 t/minute pendant 10 s] des latex précédents sur des verres Sigmal® et séchage en étuve à 50°C, des films transparents, photochromiques, d'épaisseurs 3,7 µm.

On a récupéré les films et on les extrait avec 10 ml d'acétonitrile à 80°C en présence d'un étalon interne Kemix n° 16. Cette extraction s'effectue pendant 20 minutes. Après agitation, la solution est filtrée puis analysée par chromatographie en phase liquide à haute pression (HPLC) en phase inverse. La chromatographie est faite sur colonne Kromasil® C18 (Touzart et Matignon).

Le solvant d'élution est un mélange acétonitrile/eau (80/20) en mode d'élution isocratique ou en mode gradient et la vitesse d'élution est de 1 ml/minute. Le détecteur utilisé est un détecteur Waters 484 à 230 nm.

Le rendement en composé photochromique est le ratio de la quantité de composé photochromique retrouvé dans le film par rapport à la quantité théorique attendue.

Les résultats sont donnés dans le Tableau II ci-dessous.

**TABLEAU II**

| Exemple | Mélange n° | Rendement en composé photochromique (%) |
|---|---|---|
| A | 5 | 62 |
| B | 6 | 60 |
| 1 | 1 | 100 |
| 2 | 1* | 100 |
| 3 | 2 | 96 |
| 4 | 3 | 87 |
| 5 | 4 | 89 |

| | | |
|---|---|---|
| * (amorceur AIBN en phase organique) | | |

Les résultats du Tableau II montrent que le procédé de l'invention diminue, voire supprime, la perte de composé photochromique dans le latex, au cours de la synthèse, et ce, quelle que soit la famille de composé photochromique utilisée.

### Exemple 6

On prépare le mélange dont la composition est indiquée ci-après en combinant une solution A contenant le monomère polymérisable, l'agent de stabilisation et le composé photochromique à une solution B contenant les tensio-actifs et de l'eau.

| Monomère polymérisable | |
|---|---|
| Méthacrylate de butyle | 46,4 g |

| Composé photochromique | |
|---|---|
| Spiro A | 3,25 g |

| Tensio-actif | |
|---|---|
| DISP 3065 | 1,493 g |
| DIP 0988 | 0,988 g |

| Agent de stabilisation | |
|---|---|
| Méthacrylate de stéaryle | 2,32 g |
| Eau | 50g |
| DISP 3065 = DISPONIL A 3065 = mélange d'alcool gras comportant 30 unités éthoxylées | |
| DIP 0988 = DISPONIL FES 0988 = C₁₂₋₁₄H₂₅₋₂₉(OCH₂CH₂)₁₂OSO₃⁻ Na⁺(produits fournis par la société SIDOBRE SINNOVA). | |

Après dégazage, les gouttelettes de la miniémulsion selon l'invention ont un diamètre moyen de 250 nm.

On prépare une solution d'amorceur en dissolvant 0,19 g de persulfate de sodium dans 1,9 g d'eau et on ajoute en une seule fois cette solution dans le réacteur contenant 96 g de miniémulsion pour initier la réaction de polymérisation.

La polymérisation est effectuée à une température de 60°C et on effectue à intervalles réguliers des prélèvements et détermine les teneurs ou extraits secs et le diamètre moyen des particules.

Les résultats sont donnés dans le Tableau (III).

**TABLEAU III**

| Temps de polymérisation (minutes) | Extrait sec (% en poids) | Diamètre moyen particules (nm) |
|---|---|---|
| 30 | 15 | 230 |
| 60 | 28,5 | - |
| 90 | 31,7 | 230 |
| 165 | 31,7 | 240 |

A la fin de la polymérisation (2 h 45 après l'ajout de l'amorceur), on arrête le chauffage et on laisse refroidir jusqu'à la température ambiante (23°C). Le latex est alors soutiré à 23°C et filtré sur tissus.

Le latex présente les caractéristiques suivantes :

| | |
|---|---|
| Extrait sec | 36% en poids |
| Diamètre moyen des particules | 230 nm |

On obtient ainsi un latex photochromique avec un excellent rendement en composé photochromique en fin de synthèse.

## Revendications

1. Procédé d'obtention d'un latex photochromique comprenant:
(1) la préparation d'un mélange comprenant au moins un monomère organique Z à groupement C=C, polymérisable par voie radicalaire, au moins un composé photochromique organique, au moins un agent tensio-actif, de l'eau et éventuellement un amorceur de polymérisation ;
(2) le traitement du mélange obtenu à l'étape (1) pour former une miniémulsion comprenant une phase organique dispersée sous forme de gouttelettes ayant un diamètre de 50 à 500 nm, de préférence 50 à 300 nm, dans une phase aqueuse;
(3) l'addition à la miniémulsion d'un amorceur de polymérisation, si celui-ci n'a pas été introduit lors de l'étape (1), ou d'une quantité supplémentaire d'amorceur par rapport à l'étape (1) ;
(4) la polymérisation du mélange réactionnel obtenu à l'étape (3), et
(5) la récupération du latex photochromique.

2. Procédé selon la revendication 1, **caractérisé en ce que** le monomère organique Z est choisi parmi les (méth)acrylates d'alkyle.

3. Procédé selon la revendication 1 ou 2, **caractérisé en ce que** le composé photochromique est choisi parmi les chromènes et les spirooxazines.

4. Procédé selon la revendication 1, **caractérisé en ce que** le monomère Z est choisi parmi les méthacrylates d'alkyle et le composé photochromique est choisi parmi les spirooxazines.

5. Procédé selon l'une quelconque des revendications précédentes, **caractérisé en ce que** le mélange de l'étape (1) comprend en outre un agent de stabilisation.

6. Procédé selon la revendication 5, **caractérisé en ce que** l'agent de stabilisation est choisi parmi les n-alcanes, les n-alcanes halogénés, les alcools gras et les esters d'alcools gras.

7. Procédé selon la revendication 6, **caractérisé en ce que** l'agent de stabilisation est choisi parmi l'hexadécane, l'alcool cétylique et le méthacrylate de stéaryle.

8. Procédé selon l'une quelconque des revendications précédentes, **caractérisé en ce que** l'amorceur est introduit uniquement lors de l'étape (3).

9. Procédé selon l'une quelconque des revendications précédentes, **caractérisé en ce que** l'amorceur de polymérisation est soluble dans la phase aqueuse ou la phase organique.

10. Procédé selon la revendication 9, **caractérisé en ce que** l'amorceur de polymérisation est l'azobisisobutyronitrile ou le dihydrochlorure de 2,2'-azobis(2-amidinopropane) ou le persulfate de sodium.

11. Procédé selon l'une quelconque des revendications précédentes, **caractérisé en ce que** l'étape de traitement (2) consiste à faire passer le mélange de l'étape (1) dans un microfluidiseur

12. Procédé selon l'une quelconque des revendications précédentes, **caractérisé en ce qu'**il comprend une étape de dégazage de la miniémulsion avant l'addition de l'amorceur.

## Patentansprüche

1. Verfahren zum Erhalt eines photochromen Latex, umfassend:
(1) die Herstellung einer Mischung umfassend mindestens ein radikalisch polymerisierbares organisches Monomer Z mit einer C=C-Gruppe, mindestens eine organische photochrome Verbindung, mindestens ein Tensid, Wasser und gegebenenfalls einen Polymerisationsstarter;
(2) Behandlung der in Schritt 1 erhaltenen Mischung, um eine Miniemulsion zu bilden, umfassend eine in einer wässrigen Phase in Form von Tröpfchen mit einem Durchmesser von 50 bis 500 nm, vorzugsweise 50 bis 300 nm, dispergierte organische Phase;
(3) Zugabe eines Polymerisationsstarters zu der Miniemulsion, sofern dieser nicht in Schritt (1) zugegeben wurde, oder einer bezüglich Schritt (1) zusätzlichen Menge von Polymerisationsstarter;
(4) Polymerisation der in Schritt (3) erhaltenen Reaktionsmischung, und
(5) die Gewinnung des photochromen Latex.

2. Verfahren nach Anspruch 1, **dadurch gekennzeichnet, dass** das organische Monomer Z ausgewählt wird aus den Alkyl(meth)acrylaten.

3. Verfahren nach Anspruch 1 oder 2, **dadurch gekennzeichnet, dass** die photochrome Verbindung ausgewählt wird aus den Chromenen und Spirooxazinen.

4. Verfahren nach Anspruch 1, **dadurch gekennzeichnet, dass** das Monomer Z ausgewählt wird aus den Alkylmethacrylaten und die photochrome Verbindung ausgewählt wird aus den Spirooxazinen.

5. Verfahren nach einem der vorhergehenden Ansprüche, **dadurch gekennzeichnet, dass** die Mischung in Schritt (1) ferner ein Stabilisierungsmittel enthält.

6. Verfahren nach Anspruch 5, **dadurch gekennzeichnet, dass** das Stabilisierungsmittel ausgewählt wird aus den n-Alkanen, den halogenierten n-Alkanen, den Fettalkoholen und den Estern von Fettalkoholen.

7. Verfahren nach Anspruch 6, **dadurch gekennzeichnet, dass** das Stabilisierungsmittel ausgewählt wird aus Hexadecan, Cetylalkohol und Stearylmethacrylat.

8. Verfahren nach einem der vorhergehenden Ansprüche, **dadurch gekennzeichnet, dass** der Starter nur in Schritt (3) zugegeben wird.

9. Verfahren nach einem der vorhergehenden Ansprüche, **dadurch gekennzeichnet, dass** der Polymerisationsstarter in der wässrigen Phase oder in der organischen Phase löslich ist.

10. Verfahren nach Anspruch 9, **dadurch gekennzeichnet, dass** der Polymerisationsstarter Azobisisobutyronitril oder 2,2'-Azo-bis(2-amidinopropan)-dihydrochlorid oder Natriumpersulfat ist.

11. Verfahren nach einem der vorhergehenden Ansprüche, **dadurch gekennzeichnet, dass** der Behandlungsschritt (2) darin besteht, die Mischung aus Schritt (1) durch einen Mikrofluidizer zu schicken.

12. Verfahren nach einem der vorhergehenden Ansprüche, **dadurch gekennzeichnet, dass** es einen Entgasungsschritt der Miniemulsion vor der Zugabe des Starters umfasst.

## Claims

1. Method for obtaining a photochromic latex comprising:
(1) the preparation of a mixture comprising at least one organic monomer Z with a C=C group, polymerizable by free a radical method, at least one organic photochromic compound, at least one surfactant, water and optionally a polymerization initiator;
(2) the treatment of the mixture obtained in step (1) in order to form a miniemulsion consisting of an organic phase dispersed in the form of droplets having a diameter of 50 to 500 nm, and preferably 50 to 300 nm, in an aqueous phase;
(3) the addition to the miniemulsion of a polymerization initiator, if this latter was not introduced in step (1), or of a further quantity of initiator to that added in step (1);
(4) the polymerization of the reaction mixture obtained in step (3), and
(5) the recovery of the photochromic latex.

2. Method according to Claim 1, **characterized in that** the organic monomer Z is selected from the alkyl (meth) acrylates.

3. Method according to Claim 1 or 2, **characterized in that** the photochromic compound is selected from chromenes and spirooxazines.

4. Method according to Claim 1, **characterized in that** the Z monomer is selected from the alkyl methacrylates and the photochromic compound is selected from the spirooxazines.

5. Method according to any one of the preceding Claims, **characterized in that** the mixture of step (1) comprises moreover a stabilization agent.

6. Method according to Claim 5, **characterized in that** the stabilization agent is selected from the n-alkanes, the halogenated n-alkanes, the fatty alcohols and the esters of fatty alcohols

7. Method according to Claim 6, **characterized in that** the stabilization agent is selected from hexadecane, cetyl alcohol and stearyl methacrylate.

8. Method according to any one of the preceding Claims, **characterized in that** the initiator is introduced only at step (3).

9. Method according to any one of the preceding Claims, **characterized in that** the polymerization initiator is soluble in the aqueous phase or in the organic phase.

10. Method according to Claim 9, **characterized in that** the polymerization initiator is azobisisobutyronitrile or 2,2'-azobis (2-amidinopropane) dihydrochloride or sodium persulfate.

11. Method according to any one of the preceding Claims, **characterized in that** the treatment step (2) consists of passing the mixture of step (1) in a microfluidiser.

12. Method according to any one of the preceding Claims, **characterized in that** it comprises a degassing step of the miniemulsion before the addition of the initiator.
